# EUROPEAN PATENT SPECIFICATION

(11) **EP 0 512 043 B1**
(45) Date of publication and mention of the grant of the patent: **25.05.1994**
(21) Application number: 91903745.7
(22) Date of filing: 23.01.1991
(51) Int. Cl.: E01C 23/01, G01C 15/02

(54) **METHOD, DEVICE AND SPACER PLUG FOR INDICATION OF A SURFACE ABOVE A BASE**
VERFAHREN, VORRICHTUNG UND DISTANZSTIFT ZUR MARKIERUNG EINER OBERFLÄCHE OBERHALB EINER SOHLE
PROCEDE, DISPOSITIF ET CHEVILLE D'ESPACEMENT POUR MARQUER UNE SURFACE AU-DESSUS D'UNE BASE

(30) Priority: 23.01.1990 SE 9000232
(43) Date of publication of application: 11.11.1992
(73) Proprietor: ABS BYGGSYSTEM AB, S-123 21 Farsta (SE)
(72) Inventor: DANIELSSON, Jan, Sonoma, CA 95476 (US); BERGKVIST, Tore, S-124 64 Bandhagen (SE)
(74) Representative: Sundström, Per Olof
(86) International application number: SE9100049
(87) International publication number: WO9111559

(56) References cited:
- US-A- 4 574 554
- US-A- 4 891 888

## Description

### Field of Invention

The present invention relates to a method for marking-out a surface over an uneven base surface or subsurface, for instance a concrete floor which is to be smoothed, said method being of the kind set forth in the preamble of the following independent method Claim (U.S. A 4,574,554).

The invention also relates to apparatus for marking the level of a surface over an uneven subsurface in accordance with the preamble of the following independent apparatus Claim.

The invention also relates to a level-marking peg according to the preamble of the following independent product Claim, said peg being intended for use when carrying out the inventive method and using the inventive apparatus respectively.

### Background of the Invention

When casting concrete floors, irregularities occur in the surface of the concrete and it is necessary to smooth this surface by laying a concrete finish. According to one known method, the concrete floor is smoothed to a desired surface finish, for instance a horizontal and flat surface, by marking-out the desired surface with the aid of a plurality of level markers positioned at selected locations on the floor, whereafter further concrete is laid to the said desired surface level. With the aid of a conventional, vertically adjustable levelling instrument, a marker or a beam-generating device, a fixed point, is detected in a known manner at a constant height above the floor surface, preferably placed at the highest point of said floor surface. In the detecting position of the levelling instrument, the "zero point" of said instrument marks the level to which the surface coating shall be laid in the subsequent smoothing operation. This level is marked by either heaping a mound of concrete which extends up to said level, or by forming a hole and knocking a marker peg into the hole and screwing said peg down to a level indicated by the "zero point" of the levelling instrument. A number of such level indicating placements together mark the level to which the subsequent surface concrete shall be laid in order to form the desired surface, for instance a flat horizontal floor surface.

The aforedescribed methods are time-consuming and are expensive when applied over large surface areas. The methods also result in expensive damage and wear to the material used to deliver the surface-coating material to the floor surface, for instance hoses and other equipment. The level markers positioned in the subflooring are also damaged by the equipment moved over the floor surface and also by the workmen laying the surface-finishing concrete, therewith resulting in unreliable level markings and in the risk that the surface-finished concrete floor will be uneven.

U.S. A 4,574,554 teaches a method in which a plurality of levelling pegs are glued firmly to the desired levelling points, whereafter the pegs are clipped with the aid of a clipping device which can be adjusted for clipping the pegs in one and the same plane. The level-marking pegs include a broad base plate and a peg upstanding therefrom, the position of said peg being contingent on the slope of the base layer at the peg location. The aforementioned drawbacks also apply to this method, and in addition the pegs are liable to be damaged when being clipped, said pegs not being clipped until all the pegs have been mounted on the base layer.

The object of the present invention is to provide a technique which will solve the aforesaid problems, either completely or partially, when marking-out a desired surface over an uneven subsurface, wherein the level-marking pegs are disposed so as to minimize the risk of damage to the pegs by hoses, cables and other equipment. A further object of the invention is to minimize or avoid the risk of workmen stumbling over the level-marking pegs. Still another object of the invention is to provide a method in which a desired surface can be marked-out with the aid of the inventive level-marking pegs simply and quickly in a reliable manner.

### Disclosure of the Characteristic Features of the Invention

The invention is based on a method for marking-out a desired surface above a base surface or subsurface, for instance a concrete floor which is to be smoothed, wherein level-marking pegs are connected to the base surface at a number of selected locations and clipped-off at a predetermined distance from the horizontal plane, preferably in the plane, such that the upper extremities of the pegs will indicate the desired surface (U.S. A 4,574,554), and is characterized in that the level-marking pegs are made from an elastomeric material; and in that the pegs are connected with said subsurface by driving said pegs into holes drilled at said locations to be anchored by friction therein. Preferably, each peg is clipped to the level of the desired surface immediately after being connected therewith.

The inventive method and further developments thereof are set forth in the following method Claims.

The invention also relates to an apparatus for marking a surface over/above an uneven subsurface, for instance-a concrete floor to be smoothed, wherein said surface, or plane, is marked by the upwardly projecting extremities of the clipped level-marking pegs connected to the subsurface, said apparatus including a stand which carries a vertically adjustable level-detecting device which functions to set a level which is parallel with said plane, and further includes a clipping device which can be displaced by said level-detecting device and which functions to clip the level-marking pegs connected to the subsurface to the set level (U.S. A 4,574,554), said apparatus being characterized in that it includes a connecting device for gripping an elastomeric level-marking peg and driving said peg into a pre-drilled hole in the subsurface.

The apparatus and further developments thereof are set forth in the following apparatus Claims.

The inventive level-marking peg is characterized in that it consists substantially of an elastomeric material and includes a friction head which is intended to be driven down into a hole pre-drilled in the subsurface, and an elongated neck. The peg preferably also includes a support flange on the rear part of the peg. The friction head has a configuration which prevents the peg from being withdrawn from the pre-drilled hole. The level-marking peg and further developments thereof are set forth in the following product Claims.

The inventive technique enables level-marking pegs to be appropriately spaced over the whole of the uneven surface in a simple and effective fashion. The use of pegs which are made of an elastic and flexible material, for instance a plastic material or rubber material, preferably nitrile rubber having a hardness of about 70 Shores, solves the problem of wear and damage to equipment (cables, hoses, etc.) used in a smoothing operation, and enables the level-marking pegs to be clipped or otherwise cut to the correct height above the subsurface in a simple manner. Furthermore, the use of such plugs avoids the risk of workmen stumbling over the pegs and/or disturbing their positions, and the elastic pegs can advantageously be mounted essentially vertically in their non-flexed, tensionless direction, so that they retain this directional sense subsequent to being clipped.

The invention and modifications thereof will now be described in more detail with reference to exemplifying embodiments of apparatus and level-marking pegs and with reference to the accompanying drawings, in which
- Figure 1 is a principle diagram which illustrates the manner of use of the inventive apparatus;
- Figure 2a is a top view of a third embodiment of the invention;
- Figure 2b is a side view of the apparatus illustrated in Figure 2a;
- Figure 3a is a vertical sectioned view through the feed unit shown in Figure 2;
- Figure 3b is an enlarged view of a feed tube provided with gripping arms, in accordance with Figure 3a;
- Figures 4a-c illustrate an embodiment of a marking-peg unit;
- Figure 5a is a vertical sectioned view of the level-setting and cutting unit shown in Figure 2;
- Figure 5b is a sectional view taken on the line B-B in Figure 5a;
- Figures 6a, 6b and 7 illustrate another embodiment of a peg unit;
- Figures 8a and 8b respectively show the upper part of a partially sectioned apparatus construced in accordance with the invention; and
- Figure 9 is a schematic view taken on the line IX-IX in Figure 8b.

### Detailed Description of Preferred Embodiments of the Invention

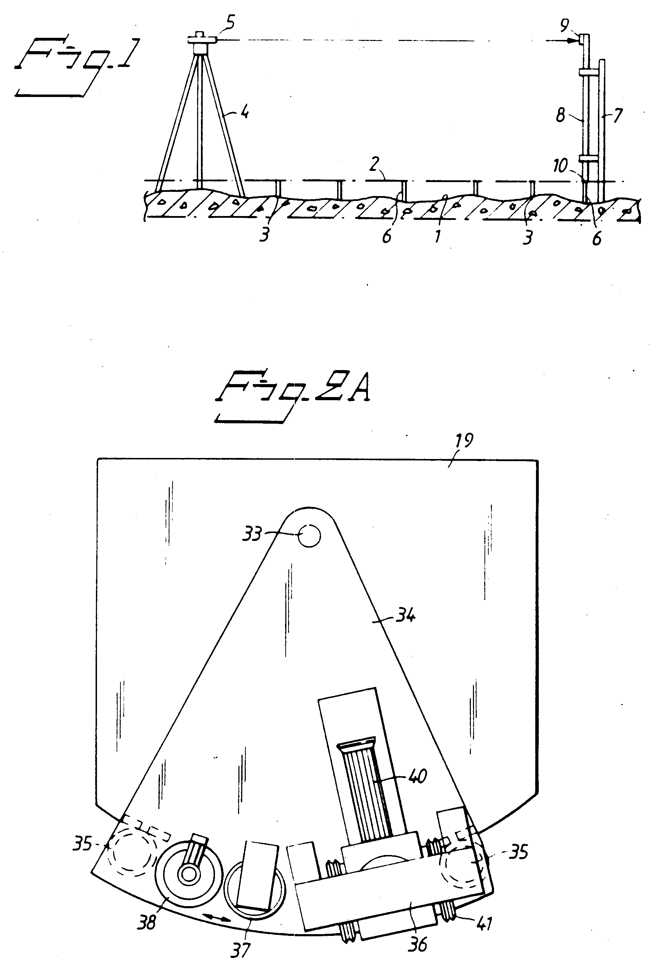

Figure 1 illustrates the use of the inventive apparatus in mounting level-marking pegs on an uneven concrete floor 1 which is to be levelled to a desired surface, for instance a horizontal, flat surface 2. The apparatus is moved between different selected locations or setting-out points 3 over the floor surface, wherewith the apparatus can either be lifted around between the various locations or can be equipped with wheels for rolling the apparatus between said locations. Placed on the floor, preferably at the highest point of said floor, is a stand 4 which carries a fixation point 5 in the form of a readable marking or a rotatable beam-generating device, for instance a laser. The peg-mounting device includes a frame structure 7 placed vertically on the floor surface 1. The frame structure 7 has slidably mounted thereon a levelling device 8 which carries on its upper extremity a level-indicator 9 operative to detect said fixation points 5, and also carries at its bottom extremity a device 10 which constitutes the "zero point" of the levelling device 8 and which marks the level of said horizontal plane 2. By moving the device between the selected level-marking points 3 and mounting a level-marking peg 6 at each point in a manner described herebelow, there is provided a plurality of level-markings which mark-out the horizontal plane 2 of the finishing surface-coating intended to smooth-out the uneven surface 1.

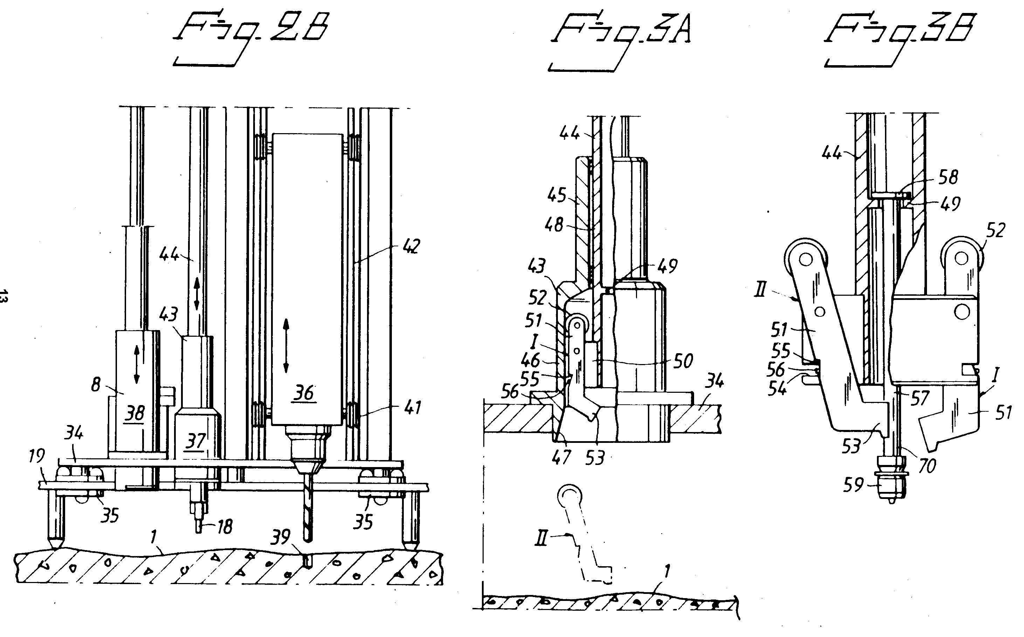

Figures 2a and 2b illustrate a peg-mounting device, each mounting operation comprising three steps. A rotatable plate 34 including three working stations 36, 37, 38 is mounted on a wheeled carriage provided with a base plate 19. The plate can be rotated about a shaft 33 and runs on rollers or wheels 35 around the curved or rounded edge of the base plate 19. Arranged on the plate are three working stations. By rotating the plate 34 about the shaft 33, each of the stations can be swung-in on the carriage to one and the same working position in which the peg 6 is to be mounted on the floor surface 1. The first working station 36 consists of a drilling unit which is intended to pre-drill a hole 39 to a pre-set depth in the floor surface 1 at said working position. The second working station 37 comprises a feed unit for feeding a peg blank 18, which subsequent to rotating the plate 34 to a position in which the feed unit is located in said working position feeds the peg down into the pre-drilled hole 39. The third working station 38 comprises a level-setting and peg-cutting unit which, subsequent to being swung-in to said working position discloses the level of the horizontal plane 2, with the aid of a levelling device 8, and at this level shortens the peg 6 driven into the hole to a length which marks the horizontal plane.

The drill unit 36 is a conventional electrically-driven or battery-driven drill provided with pairs of wheels or rollers 41 which run on vertical rails 42 provided on the plate 34. The drill can be moved vertically up and down, with the aid of a handle 40 and is used to drill a hole 39 of predetermined depth in the floor surface 1.

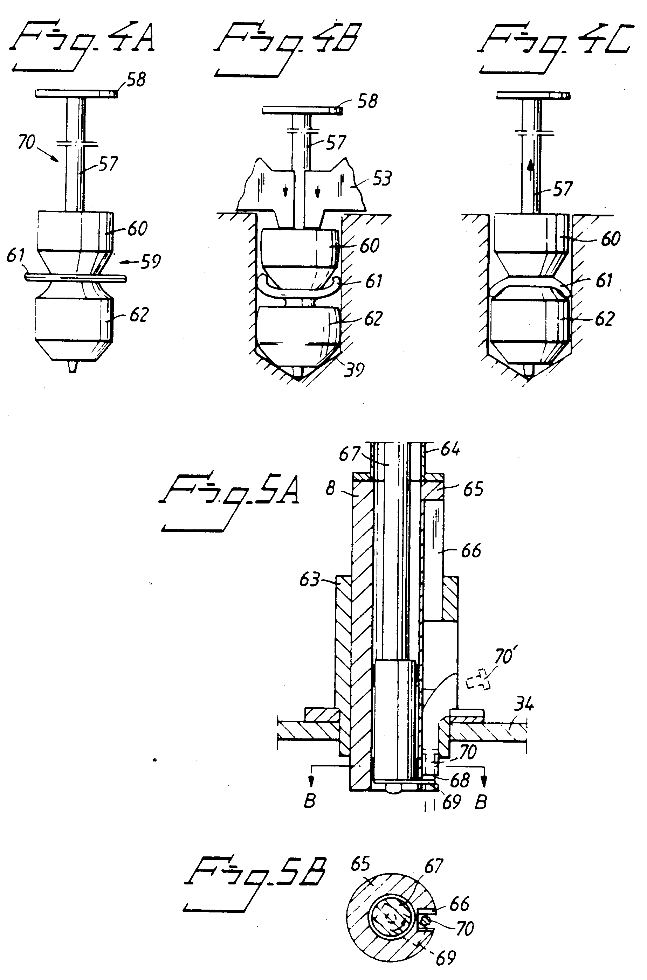

The feed unit 37 consists of a feed sleeve 43 which is fixedly mounted on the plate 34 and in which a feed tube 44 can be moved vertically. The tube 44 has a through-passing hole for a peg-blank 18, which in the illustrated case includes a plurality of mutually sequential level-marking elements placed in the through-passing hole. Figures 3a and 3b illustrate the construction of the feed sleeve 43 and the feed tube 44 with associated parts in more detail and show the manner in which these components co-act with one another when the feed tube is moved in the feed sleeve.

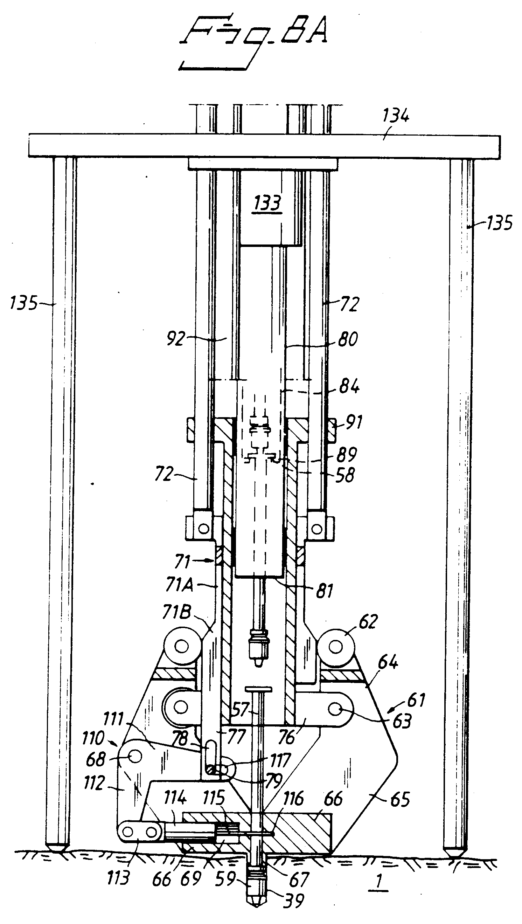

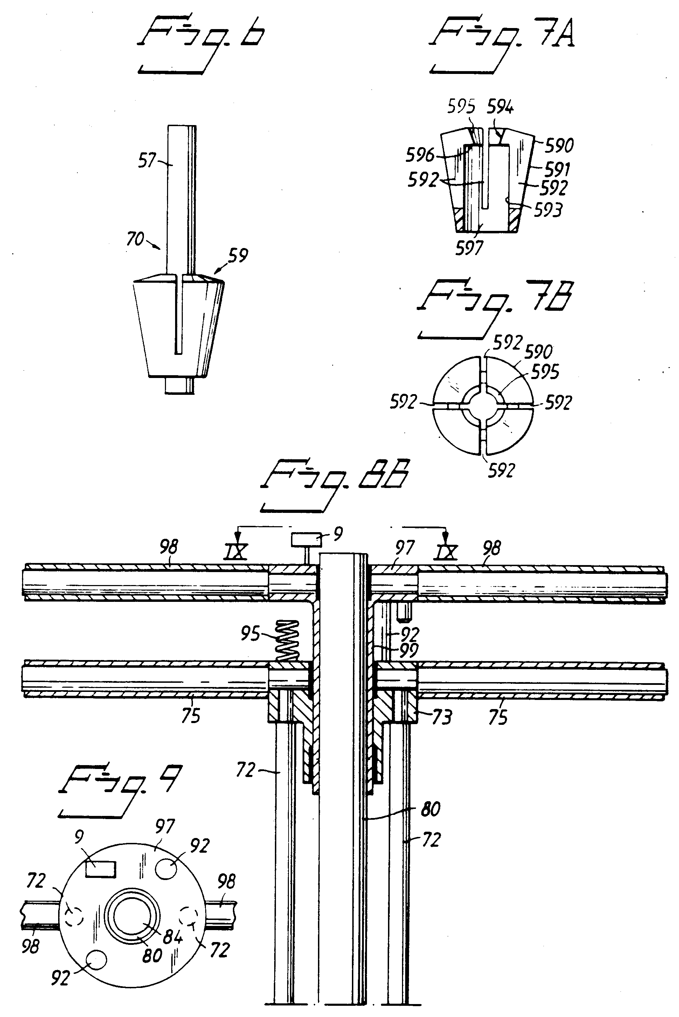

The feed sleeve 43 consists of an upper cylindrical sleeve 45 and a lower cylindrical sleeve 46, the lowermost extremity of which widens and merges with an internal, conical surface 47. The feed tube 44 consists of an upper cylindrical tube 48, which is provided with an internal flange 49, and a lower part which is provided with an outer flange 50. Mounted on the outer flange 50 are two diametrically opposed gripping arms 51 which are pivotally mounted on pivot shafts. The gripping arms 51 are provided with runners 52 on one end thereof and with gripping claws 53 on the other end thereof. The outer flange is also provided with a circular, outer groove 54 and each of the gripping arms 51 is provided on a corresponding level with a respective groove 55 in the outer edge thereof. Arranged in these grooves is an elastic band or strap 56, which strives to move the gripping arms 51 into a gripping position (see position II of the gripping arm shown in Figure 5a).

The peg blank 18 comprises level-marking elements 70 which are fed continuously in a superimposed relationship in the feed tube 44. The level-marking elements are made of an elastomeric material, for instance rubber, as shown more clearly in Figures 4a, 4b and 4c. A cylindrical neck, stem or string 57, hereinafter referred to generally as the stem, connects an upper attachment flange 58 to a lower friction head 59. The friction head consists of an upper supporting part 60, the lower portion of which is conical, an intermediate, narrow locking tongue 61, and a lower friction part 62, as illustrated in Figure 4a. Figure 4b illustrates the manner in which the level-marking element is driven into the pre-drilled hole 39 with the aid of the gripping claws 53. The locking tongue 61 is bent upwards against the conical part of the supporting part 60, where sufficient space is found for the tongue 61 to bend to one side so as to avoid friction against the inner walls when driving-in said element. When the friction part 62 reaches the bottom of the hole, the resultant compression forces will compress the friction part 62 so that its walls are urged against the inner wall of the hole. When the gripping claws 53 are loosened from the stem 57 and the pressure-forces in the friction head 59 are relieved, the friction part will return to its normal length or size and the locking tongue 61 will, instead, be pressed against the underlying friction part 62, as illustrated in Figure 4c. The friction part has a bevelled or chamfered upper part which causes the tongue 61 to be pressed-out against the inner wall of the hole 39, thereby generating frictional forces which prevent the position of the level-marking element 70 in the hole from being influenced by the rough treatment to which it is subjected during the cutting process and by the subsequent smoothing of the floor surface. The diameter of the supporting part 60 is slightly smaller than the diameter of the hole 39, so as to provide a small clearance between said supporting part and said hole and therewith facilitate driving of the level-indicating peg into said hole. When the level-marking element 70 is subjected to laterally acting forces, the support part 60 will provide support against the upper wall portion of the hole and therewith prevent any damage to said element which is likely to occur upon contact with the shaft edges and the hard material presented by the floor surface.

When feeding a level-indicating element 70 into the pre-drilled hole 39, the feed unit 37 is first rotated to its working position on the carriage. The runners 52 run on the inner wall of the sleeve and force the gripping arms 51 to the open position against the spring force exerted by the elastic strap 56, thereby causing the gripping arms 51 to take the position I (see Figures 3a and 3b) in the lower cylindrical sleeve 46. The lowermost level-indicating element 70 will thereby be moved to its starting position, in which the securing flange 58 rests against the internal flange 49. The feed tube 44 is now pressed downwards in the feed sleeve 43, wherewith the runners 52 run on the inner walls of the lower cylindrical sleeve 46. When the runners 52 reach the internal, conical surface 47, the spring force exerted by the elastic strap 56 force the runners 52 outwards into abutment with the conical surface, wherewith the gripping arms 51 are correspondingly forced in against the stem 57 on the element 70 at a location immediately above the friction head 59, and the gripping claws 53 grip around said stem. The gripping arms 51 drive the friction head 59 down to the bottom of the pre-drilled hole 39. When the feed tube 44 turns upwards, the frictional forces acting between the friction head 59 and the pre-drilled hole 39 are so great that the gripping claws 53 will slide along the stem 57 of the level-indicating peg until the runners 52 are again pressed in against the internal, conical surface 47. Due to the elasticity of the material, the securing flange 58 of the level-indicating element will slide over the edge of the internal flange 49 when the feed tube 44 turns upwards. As the runners 42 roll upwards towards the inner walls of the lower cylindrical sleeve 46, a further element 70 is fed down so that the securing flange 58 abuts the inner flange 49.

The level-setting and peg-cutting unit 38 is shown in more detail in Figures 5a and 5b. The rotatable plate or disc 34 has fixedly mounted thereon a support sleeve 63 in which a levelling device 8 can be moved vertically. The levelling device consists of an upper tube 64, the upper portion of which carries a level indicator 9, and a handle 12 is arranged in the aforedescribed manner, and a lower tube 65 which is connected with the upper tube and provided with a longitudinally extending vertical slot 66. The upper and the lower tubes 64, 65 have arranged therein a rotatable shaft 67 which is intended to accompany the levelling device 8 in its vertical movement. Provided on the bottom part of the rotatable shaft 67 is a cutter 69 which moves in a horizontal slot 68 provided in the lower tube 65. The cutter 69 extends into the elongated vertical slot 66 when the shaft 67 rotates in the levelling device 8.

When the third working station 38 is rotated to its working position, the securing flange 58 and part of the stem 57 of the level-indicating element 70 driven into the hole 39 will be fed into the elongated vertical slot 66 in the lower tube 65. The levelling device 8 is then moved to the level where the fixation point 5 is detected, said cutter 69 being.located on the level of the horizontal plane 2. The rotatable shaft 67 carrying the cutter 69 is rotated, whereupon the stem 57 of the level-indicating element is cut at the level of the horizontal plane.

The clipped ends of respective elements can be collected in a container so that they do not fall onto the surface to be smoothed, since otherwise they would be able to move up through the smoothing concrete and lie on the surface thereof.

It will be seen from Figures 5a, 5b that the clipped element-piece 70′ can be lifted by the knife 69 along the slot 66 within the sleeve 63, up to a level above the plate 34. When the device 8 is raised, the piece 70′ will be lifted along the slot 69, into which a guide shoulder engages. The guide shoulder has a bottom curved surface which deflects the piece 70′. In this way, the pieces 70′ are therefore ejected at a level above the plate 34, where they can be collected, and the plate 34 may be provided with an upstanding wall or a casing which functions to retain the pieces 70′ until they can be conveniently removed.

It is possible to effect complete mounting of a resilient level-marking peg 6 with the aid of the illustrated device in three working steps. Thus, level-marking pegs can be mounted quickly and cheaply in a reliable fashion, by rolling the carriage between the various setting-out points 3 on the floor surface and affixing the plate 34 in sequential working positions for the respective working stations 36, 37, 38 and carrying out each working step.

In the case of one embodiment (Figure 6), the peg may comprise a rubber stem 57 which has fitted on one end thereof a separate anchoring sleeve to form the anchoring head 59.

As illustrated in Figures 7a and 7b, the anchoring sleeve comprises a tubular body 590 having an external conical surface 591. The rear part of the body 590 is provided with axially extending slots 592 for resilient contraction and expansion respectively. The body 590 has a through-passing opening 597 formed by a cylindrical borring 593 through the forward part, and a conical boring 595 through the rear part, to form a substantially radial shoulder 596 between said borrings, the resultant nose or tooth 594 having an angle of about 20° for guiding in the elastomeric stem piece 57 when forming the level-indicating peg shown in Figure 6. The opening at the nose 594 is slightly smaller than the diameter of the stem 57, so that the sleeve 590 will remain seated on the stem 57 subsequent to being fitted.

The extent to which the nose 594 penetrates the stem, neck or string 57 is determined by the width of the slots 592, and when the slots 592 are compressed, the outer diameter of the body 590 is slightly larger than the drilled hole 39, so that the head will be clamped firmly in the hole when driven thereinto. The head 59 is preferably made of a thermosetting plastic material, such that when the head is driven into said hole, the head will be roughened by friction against the wall surface of the hole, therewith improving the anchorage effect. The teeth 594 bite into the stem or string 57 and therewith prevent its removal from the head.

Figure 8 illustrates a subsurface 1 in which a hole 39 has been pre-drilled generally vertically in said surface and in which a rubber level-marking element is anchored through the medium of its head 59. The element/peg also comprises a stem 57 and a rear carrier flange 58. The peg is mounted and shortened by means of the apparatus illustrated in Figures 8a, 8b and 9. The illustrated apparatus comprises a stand which rests on the subsurface 1 and includes two vertical legs 135 which are mutually connected by a bridge 134 which carries a vertical guide bush for guiding a tube (80). The tube 80 has a throughpassing channel 84 through which level-marking pegs are guided, wherein an internal flange or shoulder 89 supports temporarily a peg and a stack of pegs above the first mentioned peg, through the intermediary of the rear flange 58. The peg supported by the waist 89 is located in an axial position such that the head 59 and the stem of the peg project beneath the bottom end 81 of the tube 80 to an extent such as to enable a gripping device to grip immediately behind the head 59.

A sleeve 91 can be moved vertically on the bottom end-part of the tube 80. The sleeve 91 is connected by rods 92 to a slide sleeve (99) which can be moved vertically on the upper part of the tube 80. The sleeve 91 has an upper limit or end position (a rest position) in relation to the tube 80 and is preferably biased upwards to this position by spring means, not shown. The sleeve 91 carries two diametrically opposed tongues 76 on which levers 61 are pivotally mounted on respective pivot shafts 63 for pivotal movement in an axial plane of the tube 80.

The pivot levers 61 are substantially mutually identical and each has an upper arm 64, which carries a roller 62, and a lower arm 65, which forms a clamping jaw 66.

A camming sleeve 71 is mounted for vertical movement on the sleeve 91. The sleeve 71 is connected, via vertical rod 72, to an operating sleeve 73 (see Figure 8b) which can be moved vertically on the sleeve 99 beneath its handle or hand grip 98 at which the lever rollers 62 lie on the narrow part 71a of the sleeve 71, the gripping jaws being parted. The sleeve 73 carries an upwardly directed spring 95 which when the gripping device is open presents a vertical clearance with the handle-flange 97 of the sleeve 99 and upon contact therewith defines a first position of movement of the sleeve 81 in relation to the sleeve 91, in which position the rollers 62 have rolled onto the thicker part 71b of the sleeve 71, such as to having swung the gripping jaws 66 to a closed position in which they grip around the stem 57 of a peg, immediately behind the head 59, with the peg hanging by its end-flange 58 on the shoulder 89 in the tube 80.

The sleeve 73 is moved by means of a pair of operating handles 75.

The gripping jaws 66, with a level-indicating element griped therebetween, can be moved downwards by pushing simultaneously the mutually facing pairs of handles 98 and 75, which can be gripped by respective hands.

The appartus as a whole is constructed so that the head of a level-indicating peg will lie adjacent the surface 1 and when in register with the pre-drilled hole 39, with the handles 98, 75 held in mutual contact with one another via the spring (95), the peg is driven into the hole 39 with the head 59 of said peg anchoring the peg in said hole. Each of the jaws 66 has a nose-part 67 which extends around the stem 57 around half the circumference thereof and projects forwards through a determined distance beyond the front main surface of the jaws facing the subsurface 1 and in contact with said surface. The hole 39 is drilled to a predetermined depth, such that the head 59 will experience predetermined, axial elastic compression when driven into the hole 39, whereby the head due to its particular configuration, shown in Figure 6, will be firmly anchored when the handles 98, 75 are retracted vertically while maintaining mutual positions, i.e. with the stem 57 gripped between the jaws 66, such as to anchor the head 59. During this retraction, the stem 57 slides through the channel defined by the jaws 66 as a result of contraction. Due to the conical shape of the rear body of the head, the flange lock-ring on the head is accommodated in the thus formed space during insertion of the peg. As the head is compressed axially, the periphery of the lock-ring is driven down into the hole and when the load on the peg/withdrawal load is relieved, the locking flange is wedged firmly between the wall of the hole and the front body of the head.

The two handles are withdrawn until the indicator 9 is located on the correct level, wherewith it is first ensured that the level-indicating peg is relieved of load, whereafter the handle 75 is lifted towards the stationary handle 98 against the force of the spring 95 to a second movement position, in which the sleeve 73 strikes against a limit abutment 96 on the sleeve 97, wherewith the peg is clipped or cut by means of the knife 115.

As will be seen from Figure 8, the one gripping jaw 66 is provided with a channel 69 which is horizontal in the closed position of the jaw and in which a piston 114 is axially movable. The piston carries a horizontally positioned knife-blade 115 which-is guided in a slot that extends through the jaw and has a connecting part 116 in the other jaw, so as to enable complete severence of the peg. The piston 114 is connected by means of a pivot arm 113 to the vertical lower end 112 of a lever 110, said lever being journalled by means of a shaft 68 on the jaw 66 provided with the channel 114. The horizontally extending upper arm 113 of the lever 110 is connected to a downwardly extending part 77 of the sleeve 71 through a horizontally extending, elongated opening 117 and by means of a pivot shaft 79, said part 77 having a vertically extending, elongated opening 78 which accommodates the shaft 79, the diameter of which corresponds substantially to the width of the openings 117, 78.

The tube 80 functions as a vertical magazine for the level-indicating pegs. When a peg, or element, is drawn down past the abutment 89, the next peg or element moves gravitationally down past the abutment 89, since the head 59 and the stem 57 are smaller than the opening past the abutment 89 and the tube 80 in general has a blank space which is greater than at least the head of the peg.

## Claims

1. A method for marking-out a desired surface (2) over an uneven subsurface (1), for instance a concrete floor to be smoothed, wherein level-indicating pegs (6) are mounted on the subsurface (1) at a plurality of selected points (3) thereon, and wherein the pegs are clipped at a predeterminated distance from the desired surface (2) such that the upper extremities of said pegs will indicate a surface parallel with said desired surface, **characterized** by producing the pegs (6) from an elastomeric material and connecting the pegs to the subsurface by driving the pegs into pre-drilled holes (39) at the points (3) to be anchored by friction therein.

2. A method according to Claim 1, **characterized** in that each peg is cut before the next peg is connected to the subsurface.

3. A method according to Claim 1 or 2, **characterized** in that the level-indicating pegs are connected to the subsurface (1) in a substantially vertical position; and in that the pegs comprise a friction head (59) and a stem (57), which is connected to said head and which is narrower than said head.

4. A method according to Claim 1, 2 or 3, **characterized** in that the peg has a friction head (59) which includes a forward cylindrical part (62), as seen in the peg-driving direction, a rear cylindrical part (60) whose front portion tapers conically in a forward direction, and a annular flange (61) located between said cylindrical parts (60, 62), the outer diameter of said annular flange being greater that the diameter of the head (59); and in that the head (59) is compressed axially against the bottom of the pre-drilled hole (39) when driven down in said hole.

5. Apparatus for marking a plane (2) over an uneven subsurface (1), for instance a concrete floor to be smoothed, wherein the plane (2) is marked by the clipped, upwardly projecting extremities of level-marking pegs (6) mounted on the subsurface (1), said apparatus including a stand (7) having a vertically adjustable level-detecting device (8, 9) for setting a level parallel with the plane (2), and a clipping device (10) capable of being displaced by the level-detecting device to clip the pegs (6) mounted on the subsurface (1) at said set level position, **characterized** in that the apparatus includes a mounting arrangement (50-53, 43-47, 61-69) which functions to grip an elastomeric level-indicating peg (6) and drive said peg into a hole (39) pre-drilled in the subsurface (1) and in that the mounting arrangement (50-53) includes a pair of jaws (53, 66), which are suitable for grip ping around a peg (6) behind the head (57) thereof, and those parts of the jaws (53, 66) which face towards the head (57), form -in the closed position of said jaws -a driving sleeve which is suitable for fitting in the drilled hole.

6. Apparatus according to Claim 5, **characterized** in that the mounting arrangement includes means for mounting the pegs on the subsurface in a vertical position.

7. Apparatus according to Claim 5, **characterized** in that the clipping device includes a knife (115) carried by a jaw (69).

8. Apparatus according to any of Claims 5-7, **characterized** by a generally vertical feed tube (80) for feeding level-indicating pegs into the mounting arrangement; and in that the feed tube has an internal supporting flange (49, 89) which is suitable for supporting a peg (6) via a radial projection (58) at the rear end of respective pegs (6) which projects beyond the head; the feed tube in general having a cross-section which is greater that the head (59) of the pegs intended to be fed.

9. Apparatus according to any one of Claims 5-8, **characterized** in that the stand (7) includes the feed tube (8) and a support foot (134, 135) connected thereto, in that the gripping device (61, 61) is located at the bottom end of the feed tube (8) and is carried by a holder (91) that can be moved along the feed tube (80) by means of a first handle (98) located at the upper end of the tube; in that the jaws (66) of the gripping device are pivotally mounted on the holder (91, 63) and are intended to grip a level-indicating peg hanging on the supporting flange (89) of the feed tube and projecting out of said tube by virtue of the fact that a second handle (75) guiding the gripping device is displaced from a rest position relative to the first handle to a first movement position and that the clipping device (115) is activated by driving the second handle to a second movement position relative to the first handle.

10. Apparatus according to Claim 9, **characterized** in that the second handle (75) is connected to a camming sleeve (71) which co-acts with a pair of levers (61) which form the gripping jaws (66).

11. Apparatus according to Claim 10, **characterized** in that a spring device (95) is mounted on the one handle (75) for co-action with the other handle (98) to form a spring-defined gripping position of said gripping device; and in that the one handle (97, 98) carried an abutment shoulder (96) intended for co-action with the second handle (73, 75) to define a clipping position in which the two handles are located closed together than at the gripping limit position; and in that the clipping device (115) is connected to the camming sleeve (71) so as to be activated by said sleeve when the two handles are driven into contact via the abutment shoulder.

12. A level-indicating peg which is intended to be mounted on an uneven subsurface and to be clipped to mark with its clipped extremity a plane above the subsurface (1) **characterized** in that the peg is made essentially of an elastomeric material; and in that said peg has an anchoring head (59) for frictional anchorage in a pre-drilled hole in the subsurface in that the peg includes a stem (57) which is joined to the head (59) and which is narrower than said head, in that the head (59) includes, when seen in the peg-driving direction, a front body (62), a rear body (60) having a front conical part to form a waist between the two bodies (60, 62) of said head; and in that an annular flange (61) connected to the head is located at said waist and has a greater outer diameter than the first and the second body, so that the flange (61) can be bent back within the waist when the peg is driven in but be wedged between the front body and the hole wall when the head moves in the opposite direction.

13. A level-indicating peg according to Claim 12, **characterized** by a suspension flange (58) located on the rear part of the peg and projecting radially beyond said head (59).

14. A level-indicating peg according to any one of claims 12 or 13, **characterized** in that the front body has a rearwardly conically tapering part.

## Patentansprüche

1. Verfahren zur Festlegung oder Markierung einer gewünschten Oberfläche (2) über einer unebenen Grundfläche (1), beispielsweise einem Betonboden, der geglättet werden soll, bei dem eine Höhenlage markierende Distanzstücke (6) auf der Grundfläche (1) an einer Vielzahl von ausgewählten Punkten (3) befestigt werden und bei dem die Distanzstifte in einem vorgegebenen Abstand von der gewünschten Oberfläche (2) derart abgeschnitten werden, daß die oberen Enden der Distanzstifte eine Oberfläche parallel zu der gewünschten Oberfläche anzeigen,
dadurch gekennzeichnet, daß die Distanzstifte (6) aus einem Elastomermaterial hergestellt werden und die Distanzstifte mit der Grundfläche durch Eintreiben der Distanzstifte in vorher gebohrte Bohrlöcher (39) an den Punkten (3) verbunden werden, um in diesen Bohrlöchern durch Reibung verankert zu werden.

2. Verfahren nach Anspruch 1,
dadurch gekennzeichnet, daß jeder Distanzstift abgeschnitten wird, bevor der nächste Distanzstift mit der Grundfläche verbunden wird.

3. Verfahren nach Anspruch 1 oder 2,
dadurch gekennzeichnet, daß die eine Höhenlage anzeigenden Distanzstifte mit der Grundfläche (1) in einer im wesentlichen vertikalen Position verbunden werden, und daß die Distanzstifte einen Reibkopf (59) und einen Schaft (57) umfassen, der mit dem Kopf verbunden ist und schmaler als der Kopf ist.

4. Verfahren nach Anspruch 1, 2 oder 3,
dadurch gekennzeichnet, daß der Distanzstift einen Reibkopf (59) aufweist, der bei Betrachtung in der Distanzstift-Eintreibrichtung einen vorderen zylindrischen Teil (62), einen hinteren zylindrischen Teil (60), dessen vorderer Abschnitt sich konisch in einer Vorwärtsrichtung verjüngt, und einen kreisringförmigen Flansch (61) einschließt, der zwischen den zylindrischen Teilen (60, 62) liegt, daß der Außendurchmesser des kreisringförmigen Flansches größer als der Durchmesser des Kopfes (59) ist, und daß der Kopf (59) in Axialrichtung gegen den Boden des vorher gebohrten Bohrloches (39) zusammengedrückt wird, wenn er in das Bohrloch eingetrieben wird.

5. Vorrichtung zur Festlegung oder Markierung einer Oberfläche (2) über einer unebenen Grundfläche (1), beispielsweise einem zu glättenden Betonboden, bei der die Ebene (2) durch die abgeschnittenen, nach oben vorspringenden Enden von die Höhenlage markierenden Distanzstiften (6) markiert ist, die auf der Grundfläche (1) befestigt sind, wobei die Vorrichtung einen Ständer mit einem in Vertikalrichtung einstellbaren, eine Höhenlage feststellenden Gerät (8, 9) zur Einstellung einer Höhenlage parallel zur Ebene (2) und eine Abschneidvorrichtung (10) einschließt, die durch das die Höhenlage feststellende Gerät verstellbar ist, um die auf der Grundfläche (1) befestigten Distanzstifte (6) auf die einzustellende Höhenlage abzuschneiden,
dadurch gekennzeichnet, daß die Vorrichtung eine Befestigungsanordnung (50-53, 43-47, 61-69) einschließt, die ein Ergreifen eines aus Elastomermaterial bestehenden, eine Höhenlage anzeigenden Distanzstiftes (6) und das Eintreiben dieses Distanzstiftes in ein vorher in der Grundfläche (1) gebohrtes Bohrloch (39) bewirkt, und daß die Befestigungsanordnung (50-53) zwei Greifbacken (53, 66) einschließt, die dazu geeignet sind, um den Distanzstift (6) hinter dessen Kopf (57) zu ergreifen, wobei die Teile der Greifbacken (53, 66), die auf den Kopf (57) gerichtet sind, - in der geschlossenen Position der Greifbacken -, eine Eintreibhülse bilden, die dazu geeignet ist, in das Bohrloch zu passen.

6. Vorrichtung nach Anspruch 5,
dadurch gekennzeichnet, daß die Befestigungsanordnung Einrichtungen zur Befestigung der Distanzstifte auf der Grundfläche in einer vertikalen Position einschließt.

7. Vorrichtung nach Anspruch 5,
dadurch gekennzeichnet, daß die Abschneidvorrichtung ein Messer (115) einschließt, das von einer Greifbacke (69) getragen ist.

8. Vorrichtung nach einem der Ansprüche 5 bis 7,
gekennzeichnet durch ein allgemein vertikales Zuführungsrohr (80) zur Zuführung der die Höhenlage anzeigenden Distanzstifte in die Befestigungsanordnung, wobei das Zuführungsrohr einen inneren Halteflansch (49, 89) aufweist, der dazu geeignet ist, einen Distanzstift (6) über einen radialen Vorsprung (58) am hinteren Ende eines jeweiligen Distanzstiftes (6) zu haltern, der über den Kopf hinaus vorspringt, und wobei das Zuführungsrohr allgemein einen Querschnitt aufweist, der größer als der Kopf (59) der Distanzstifte ist, die zugeführt werden sollen.

9. Vorrichtung nach einem der Ansprüche 5 bis 8,
dadurch gekennzeichnet, daß der Ständer (7) das Zuführungsrohr (8) und einen hiermit verbundenen Haltefuß (134, 135) einschließt, daß die Greifeinrichtung (61, 61) am unteren Ende des Zuführungsrohres (8) angeordnet ist und von einem Halter (91) getragen wird, der entlang des Zuführungsrohres (80) mit Hilfe eines ersten Handgriffes (98) bewegbar ist, der am oberen Ende des Rohres angeordnet ist, und daß die Greifbacken (66) der Greifvorrichtung schwenkbar an dem Halter (91, 63) befestigt sind und dazu bestimmt sind, einen die Höhenlage anzeigenden Distanzstift, der an dem Halteflansch (89) des Zuführungsrohres hängt und aus dem Rohr heraushängt, dadurch zu ergreifen, daß ein zweiter Handgriff (75), der die Greifvorrichtung führt, von einer Ruheposition gegenüber dem ersten Handgriff zu einer ersten Bewegungsposition bewegt wird, und daß die Abschneidvorrichtung (115) durch Antreiben des zweiten Handgriffes auf eine zweite Bewegungsposition gegenüber dem ersten Handgriff aktiviert wird.

10. Vorrichtung nach Anspruch 9,
dadurch gekennzeichnet, daß der zweite Handgriff (75) mit einer Nockenhülse (71) verbunden ist, die mit zwei Hebeln (61) zusammenwirkt, die die Greifbacken (66) bilden.

11. Vorrichtung nach Anspruch 10,
dadurch gekennzeichnet, daß ein Federelement (95) auf dem einen Handgriff (75) zum Zusammenwirken mit dem anderen Handgriff (98) befestigt ist, um eine durch die Feder festgelegte Greifposition der Greifvorrichtung festzulegen, und daß der andere Handgriff (97, 98) eine Anschlagschulter (96) trägt, die für ein Zusammenwirken mit dem zweiten Handgriff (73, 75) bestimmt ist, um eine Abschneidposition zu bilden, in der die beiden Handgriffe enger beieinanderliegen als in der Greifer-Grenzstellung, und daß die Abschneidvorrichtung (115) mit der Nockenhülse (71) derart verbunden ist, daß sie durch die Hülse aktiviert wird, wenn die beiden Handgriffe über die Anschlagschulter miteinander in Berührung angetrieben werden.

12. Ein eine Höhenlage anzeigender Distanzstift, der dazu bestimmt ist, auf einer unebenen Grundfläche befestigt zu werden und abgeschnitten zu werden, um mit seinem abgeschnittenen Ende eine Ebene oberhalb der Grundfläche (1) zu markieren,
dadurch gekennzeichnet, daß der Distanzstift im wesentlichen aus einem Elastomermaterial hergestellt ist, daß der Distanzstift einen Verankerungskopf (59) für eine Verankerung durch Reibwirkung in einem vorher gebohrten Bohrloch in der Grundfläche aufweist, daß der Distanzstift einen Schaft (57) einschließt, der mit dem Kopf (59) verbunden ist und schmaler als der Kopf ist, daß der Kopf (59) bei Betrachtung in der Distanzstift-Eintreibrichtung einen vorderen Körper (62) und einen hinteren Körper (60) mit einem vorderen konischen Teil zur Bildung einer Einschnürung zwischen den beiden Körpern (60, 62) des Kopfes einschließt, und daß ein kreisringförmiger Flansch (61), der mit dem Kopf verbunden ist, an der Einschnürung liegt und einen größeren Außendurchmesser aufweist als der erste und zweite Körper, so daß der Flansch (61) in der Einschnürung zurückgebogen werden kann, wenn der Distanzstift eingetrieben wird, jedoch zwischen dem vorderen Körper und der Wand des Bohrloches verkeilt wird, wenn sich der Kopf in der entgegengesetzten Richtung bewegt.

13. Ein eine Höhenlage anzeigender Distanzstift gemäß Anspruch 12,
gekennzeichnet durch einen Halterungsflansch (58), der am hinteren Teil des Distanzstiftes liegt und in Radialrichtung über den Kopf (59) hinaus vorspringt.

14. Ein eine Höhenlage anzeigender Distanzstift gemäß einem der Ansprüche 12 oder 13,
dadurch gekennzeichnet, daß der vordere Körper einen hinteren, sich konisch verjüngenden Teil aufweist.

## Revendications

1. Un procédé pour marquer une surface souhaitée (2) sur une surface de soubassement inégale (1), par exemple un plancher en béton à lisser, dans lequel des chevilles d'indication de niveau (6) sont montées sur la surface de soubassement (1) en une pluralité d'emplacements sélectionnés (3) de la surface de soubassement, et dans lequel chevilles sont étêtées à une distance prédéterminée de la surface souhaitée (2) de telle façon que les extrémités supérieures desdites chevilles indiquent une surface parallèle à ladite surface souhaitée, caractérisé en ce que l'on réalise les cheville 6 en un matériau élastomère, et en ce que l'on relie les chevilles à la surface de soubassement en engageant les chevilles dans des trous préforés (39) aux emplacements (3) où les chevilles doivent être ancrées par friction

2. Un procédé selon la revendication 1, caractérisé en ce que chaque cheville est coupée avant que la cheville suivante soit reliée à la surface de soubassement.

3. Un procédé selon la revendication 1 ou 2, caractérisé en ce que les chevilles d'indication de niveau sont reliées à la surface de soubassement (1) dans une position sensiblement verticale, et en ce que les chevilles comportent une tête de friction (59) et une tige (57) qui est reliée à ladite tête et qui est plus étroite que ladite tête.

4. Un procédé selon la revendication 1, 2 ou 3, caractérisé en ce que la cheville comporte une tête de friction (59) qui est munie d'une partie cylindrique avant (52) vue dans la direction d'engagement de la cheville, d'une partie cylindrique arrière (60) dont la partie frontale s'effile de façon conique dans une direction avant, et le rebord annulaire (61) disposé entre lesdites parties cylindriques (60, 62), le diamètre extérieure dudit rebord annulaire étant supérieur au diamètre de la tête (59), et en ce que la tête (59) est comprimée axialement contre le fond du trou préforé (39) lorsqu'elle est engagée dans ledit trou.

5. Un appareil pour marquer un plan (2) sur une surface de soubassement inégale (1), par exemple un plancher en béton à lisser, dans lequel le plan (2) est marqué par les extrémités étêtées et faisant saillie vers le haut, des chevilles de marquage de niveau (6) montées sur la surface de soubassement (1), ledit appareil comprenant un montant (7) muni d'un dispositif de détection de niveau réglable verticalement (8, 9) pour fixer un niveau parallèle au plan (2) et un dispositif d'étêtage (10) susceptible d'être déplacé par le dispositif de détection de niveau pour étêter les chevilles (6) montées sur la surface de soubassement (1) à leur dite position de niveau fixée, caractérisé en ce que l'appareil comporte un agencement de montage (50 à 53, 43 à 47, 61 à 69) qui fonctionne pour accrocher une cheville en élastomère d'indication de niveau et pour engager ladite cheville dans un trou (39) préforé dans la surface de soubassement (1), et en ce que l'agencement de montage (50 à 53) comporte une paire de mâchoires (53, 56) qui sont aptes à accrocher une bague autour d'une cheville (6) derrière la tête (57) de la cheville, et les parties des mâchoires (53, 66) qui sont situées en face de la tête (57) formant - dans la position fermée desdites mâchoires - un manchon d'entraînement qui est apte à s'engager à force dans le trou foré.

6. Appareil selon la revendication 5, caractérisé en ce que l'agencement de montage comporte des moyens pour monter les chevilles sur la surface de soubassement dans une position verticale.

7. Appareil selon la revendication 5, caractérisé en ce que le dispositif de pincement pour étêter comporte un couteau (115) porté par une mâchoire (69).

8. Appareil selon l'une quelconque des revendications 5 à 7, caractérisé par un tube d'alimentation de forme généralement verticale (80) pour alimenter en chevilles d'indication de niveau l'agencement de montage; et en ce que le tube d'alimentation comporte un rebord de support interne (49, 89) qui est apte à supporter une cheville (6) via une partie radiale en saillie radiale (58) à l'extrémité arrière des chevilles correspondantes (6) qui font saillies au-delà de la tête, le tube d'alimentation présentant d'une façon générale une section transversale qui est supérieure à la tête (59) des chevilles destinées à être approvisionnées.

9. Appareil selon l'une quelconque des revendications 5 à 8, caractérisé en ce que le montant (7) comporte le tube d'alimentation (8) et un pied de support (134, 135) relié à ce tube, en ce que le dispositif d'accrochage (61, 61) est disposé à l'extrémité de fond du tube d'alimentation 8 et est porté par un support (91) qui peut être déplacé le long du tube d'alimentation (80) au moyen d'une première poignée (98) disposée à l'extrémité supérieure du tube, et en ce que les mâchoires (66) du dispositif d'accrochage sont montées pivotantes sur le support (91, 63) et sont destinées à saisir une cheville d'indication de niveau qui pend sur le rebord de support (89) du tube d'alimentation et qui fait saillie hors dudit tube, du fait qu'un second levier (75) guidant le dispositif d'accrochage est déplacé à partir d'une position de repos par rapport à la première poignée vers une position de premier déplacement, et en ce que le dispositif d'accrochage (115) est actionné en déplaçant la seconde poignée vers une position de second déplacement par rapport à la première poignée.

10. Appareil selon la revendication 9, caractérisé en ce que la seconde poignée (75) est reliée à un manchon à came (71) qui coopère avec une paire de leviers (61) qui forment les mâchoires de pincement (66).

11. Appareil selon la revendication 10, caractérisé en ce qu'un dispositif élastique (95) est monté sur l'une des poignées (75) pour coopérer avec une autre poignée (98) afin de définir une position de pincement définie élastiquement dudit dispositif de pincement, et en ce que l'une des poignées (97, 98) portée par un épaulement de butée (96) destiné à coopérer avec la seconde poignée (73, 75) pour définir une position de pincement dans laquelle les deux poignées sont disposées fermées ensemble en position de limite de pincement, et en ce que le dispositif d'étêtement (115) est relié au manchon à came (71) de façon à être actionné par ledit manchon lorsque les deux poignées sont déplacées jusqu'au contact via l'épaulement de butée.

12. Une cheville d'indication de niveau qui est destinée à être montée sur une surface de soubassement inégale, et à être étêtée de façon à marquer par son extrémité étêtée un plan au-dessus de la surface de soubassement (1), caractérisée en ce que la cheville est réalisée essentiellement en un matériau élastomère, et en ce que ladite cheville comporte une tête d'ancrage (59) pour réaliser un ancrage à friction dans un trou préforé dans la surface, et en ce que la cheville comporte une tige (57) qui est reliée à la tête (59) et qui est plus étroite que ladite tête, en ce que la tête (59) comporte, vu dans la direction d'engagement de la cheville, un corps frontal (62), un corps arrière (60) muni d'une partie frontale conique pour former une partie plus mince ou étranglement entre les deux corps (60, 62) de ladite tête; et en ce qu'un rebord annulaire (61) relié à la tête est disposé sur ledit étranglement et présente un diamètre extérieur supérieur à celui du premier et du second corps, de telle façon que le rebord (61) puisse être fléchi en arrière à l'intérieur de la partie mince ou étranglement lorsque la cheville est engagée, tout en étant coincé entre le corps frontal et la paroi du trou, lorsque la tête se déplace dans la direction opposée.

13. Une cheville d'indication de niveau selon la revendication 12, caractérisée par un rebord de suspension (58) disposé sur la partie arrière de la cheville et faisant saillie radialement derrière ladite tête (59)

14. Une cheville d'indication de niveau selon l'une quelconque des revendications 12 ou 13, caractérisée en ce que le corps frontal comporte une partie qui se termine en pointe conique vers l'arrière.
